# EUROPEAN PATENT APPLICATION

(11) **EP 4 773 092 A1**
(43) Date of publication of application: **08.07.2026**
(21) Application number: 25223092.5
(22) Date of filing: 12.12.2025
(51) Int. Cl.: G06V 10/25, G06V 20/52, G06V 40/10

(54) **INFORMATION PROCESSING PROGRAM, INFORMATION PROCESSING METHOD, AND INFORMATION PROCESSING DEVICE**

(30) Priority: 01.01.2025 IL 31813525
(71) Applicant: FUJITSU LIMITED, Kawasaki-shi, Kanagawa 211-8588 (JP); B.G. Negev Technologies and Applications Ltd. at Ben-Gurion University, 8410501 Beer Sheva (IL)
(72) Inventor: SHAMS, Jacob, 841050 Beer Sheva (IL); NASSI, Ben, 841050 Beer Sheva (IL); KODA, Satoru, Kawasaki-shi, 211-8588 (JP); SHABTAI, Asaf, 841050 Beer Sheva (IL); ELOVICI, Yuval, 841050 Beer Sheva (IL)
(74) Representative: Haseltine Lake Kempner LLP

(57) **Abstract**

An information processing program causes a computer to execute a process including detecting a bounding box of an object in a plurality of frames captured by a camera installed at a predetermined point, and generating a heat map that represents average reliability at each set of coordinates in a range captured by the camera, based on reliability of each of a plurality of the detected bounding boxes.

## Description

### FIELD

The present invention relates to an information processing program, an information processing method, an information processing device, a detection program, a detection method, and a detection device.

### BACKGROUND

In recent years, a technique for detecting an object and a person in images and videos using a machine learning model has been known. For example, this technique detects a bounding box that indicates an area of an object included in an image and the category (for example, a person).

Patent Literature 1: U.S. Patent Application Publication No. 2024/0371134

Non Patent Literature 1: You Only Look Once: Unified, Real-Time Object Detection in 2016 IEEE Conference on Computer Vision and Pattern Recognition (CVPR), Las Vegas, NV, USA, 2016, pp. 779-788

However, depending on conditions such as the position of a person and the distance from a camera, there are positions in an image where the machine learning model is good at detecting and not good at detecting. Hence, the detection accuracy may be reduced.

For example, even if person detection is performed in the same time zone, the certainty factor of person detection when a person is facing (0 degrees) the camera at a position 5 m away from the camera may be 0.96, and the certainty factor of person detection when a person is standing and rotated by 270 degrees from the camera at a position 5 m away from the camera may be 0.59. Moreover, even if a person is standing and rotated by 315 degrees from the camera at a position 10 m away from the camera, the detection certainty factor in the morning may be lower than that in the evening. In this manner, in the person detection using a machine learning model, there is a blind spot that is a condition where the machine learning model is not good at detecting.

In one aspect, an object is to provide an information processing program, an information processing method, an information processing device, a detection program, a detection method, and a detection device that can improve the accuracy of object detection.

### SUMMARY

According to an aspect of an embodiment, an information processing program causes a computer to execute a process including detecting a bounding box of an object in a plurality of frames captured by a camera installed at a predetermined point, and generating a heat map that represents average reliability at each set of coordinates in a range captured by the camera, based on reliability of each of a plurality of the detected bounding boxes.

### BRIEF DESCRIPTION OF THE DRAWINGS

FIG. 1 is a diagram for explaining an information processing device according to a first embodiment.
FIG. 2 is a diagram for explaining the information processing device according to the first embodiment.
FIG. 3 is a functional block diagram illustrating a functional configuration of the information processing device according to the first embodiment.
FIG. 4 is a diagram for explaining a detection process.
FIG. 5 is a diagram for explaining generation of a heat map.
FIG. 6 is a diagram for explaining correction of a certainty factor.
FIG. 7 is a flowchart illustrating a flow of the generation process of a heat map.
FIG. 8 is a flowchart illustrating a flow of the person detection process.
FIG. 9 is a diagram for explaining an example of a hardware configuration.

### DESCRIPTION OF EMBODIMENTS

Preferred embodiments will be explained with reference to accompanying drawings. Note that the invention is not limited to the embodiments. The embodiments may be appropriately combined within a consistent range.

### (a) First Embodiment

### Description of Information Processing Device 10

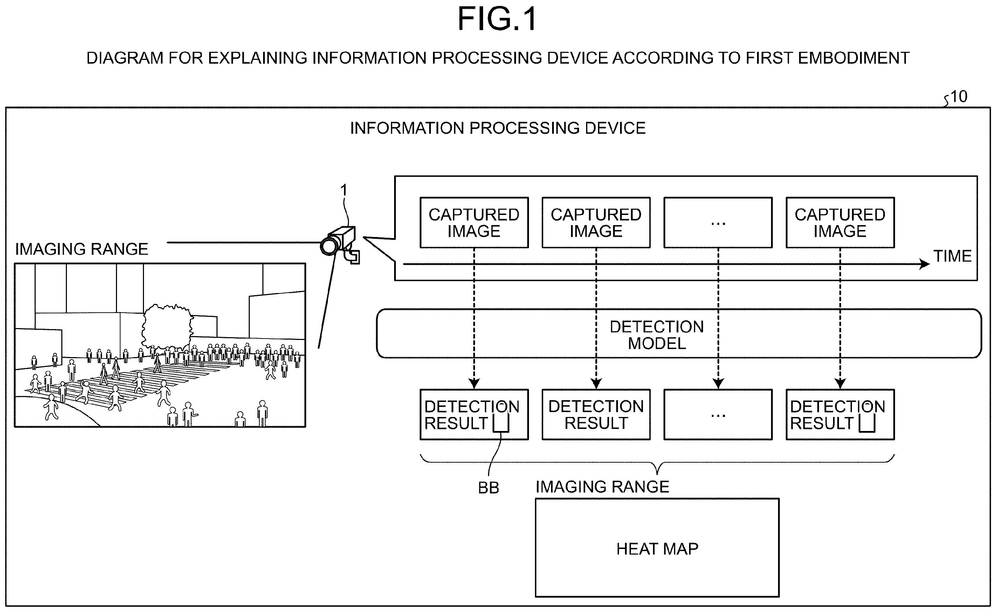

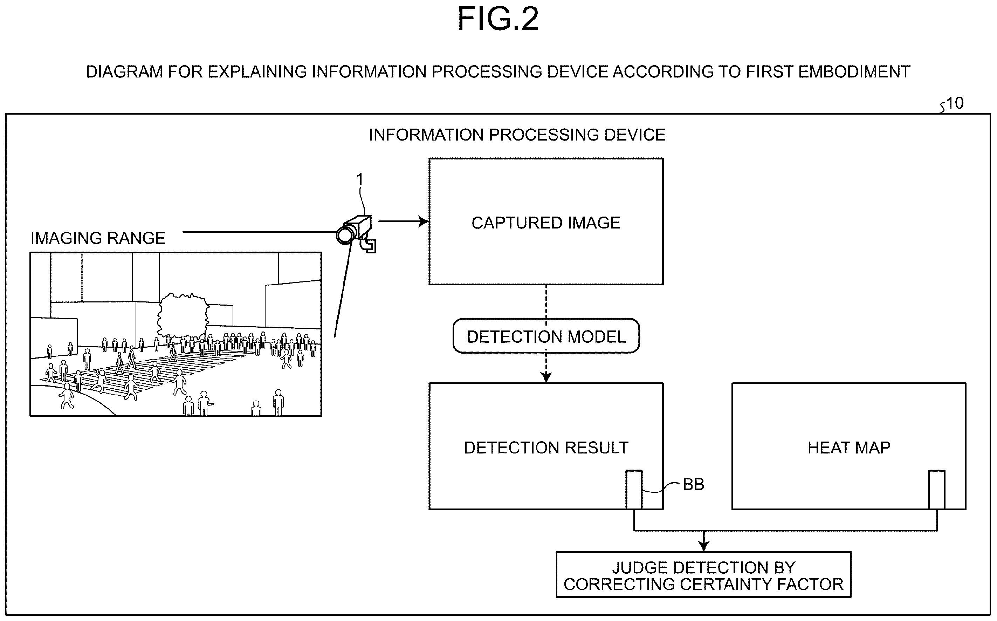

FIG. 1 and FIG. 2 are diagrams for explaining an information processing device 10 according to a first embodiment. The information processing device 10 illustrated in FIG. 1 is connected to a fixed-point surveillance camera 1 (hereinafter, may be simply referred to as a camera 1) installed at a predetermined point.

The camera 1 captures video data (hereinafter, may be simply referred to as a video) of an area within a certain range, and outputs the captured video data to the information processing device 10. The size and number of pixels of each frame in the video data captured by the camera 1 are constant. The information processing device 10 is an example of a computer that performs person detection on each frame (image data) that configures the video input from the camera 1 using a pre-trained detection model, and detects a suspicious person or the like.

Generally, in the person detection using a machine learning model, there is a blind spot that is a condition where the machine learning model is not good at detecting. Thus, for example, if a malicious third party is aware of the blind spot, such a third party may be able to escape from being tracked, "by moving not to face the surveillance camera", "by moving in the morning when detection is difficult", and the like. As a result, there is a risk of overlooking (false negative) a suspicious person.

Therefore, for example, the information processing device 10 according to the first embodiment prevents overlooking and improves the accuracy of person detection, by increasing the detection certainty factor at the position where the information processing device 10 is not good at detecting a person and the like, and correcting the certainty factor during the person detection according to the detection position on the frame.

In this example, the information processing device 10 executes a process of generating a heat map used for correcting a certainty factor that is an example of reliability, for each pixel in an image captured by the camera 1, and a process of correcting the certainty factor during the person detection using the generated heat map. Thus, a generation phase in which a heat map is generated, and a correction phase in which the certainty factor is corrected during the person detection, will be described separately.

### Generation Phase

First, a process of generating a heat map performed by the information processing device 10 will be described with reference to FIG. 1. Specifically, the information processing device 10 detects a bounding box (hereinafter, may be referred to as "BB" or "bb") of a person in a plurality of frames captured by the camera 1 installed at a predetermined point. Then, on the basis of the reliability of each of a plurality of the detected bounding boxes, the information processing device 10 generates a heat map that represents the average reliability at each set of coordinates in a range captured by the camera 1.

For example, as illustrated in FIG. 1, the information processing device 10 inputs each captured image (each frame) captured by the camera 1 during a predetermined period (for example, 24 hours, morning, daytime, and nighttime, a week, and the like) into the detection model, and obtains the detection results including the detection of a bounding box (BB) and a certainty factor (or often called a confidence in the machine learning field). Then, the information processing device 10 calculates the average value of the certainty factor for each pixel in each frame. And then, the information processing device 10 generates a heat map in which the average value of the certainty factors is associated with each pixel within the imaging range.

Next, a process of correcting the certainty factor using a heat map performed by the information processing device 10 will be described with reference to FIG. 2. Specifically, the information processing device 10 detects the reliability of detection of a bounding box of a person and the person, from a frame to be detected captured by the camera 1 installed at a predetermined point, using a detection model. Subsequently, the information processing device 10 corrects the reliability detected from the frame to be detected, using a heat map that is generated on the basis of the frames captured by the camera 1, and that represents the average reliability calculated on the basis of the reliability of a plurality of the bounding boxes detected on the basis of the frames.

For example, as illustrated in FIG. 2, after generating the heat map, the information processing device 10 inputs the captured images captured by the camera 1 into the detection model, and obtains the detection results including the BB and the certainty factor. Then, among the areas in the heat map, the information processing device 10 obtains the average certainty factor of an area (a plurality of pixels) corresponding to the BB in the detection results, and corrects the certainty factor in the detection results using the average certainty factor. And then, for example, if the corrected certainty factor is equal to or greater than a threshold value, the information processing device 10 determines that a person is detected, and if the corrected certainty factor is less than a threshold value, the information processing device 10 determines that a person is not detected.

In this manner, even in a case when overlooking (false negative) is likely to occur, the information processing device 10 can improve the detection success rate (true positive), and implement the "safety first".

### Functional Configuration

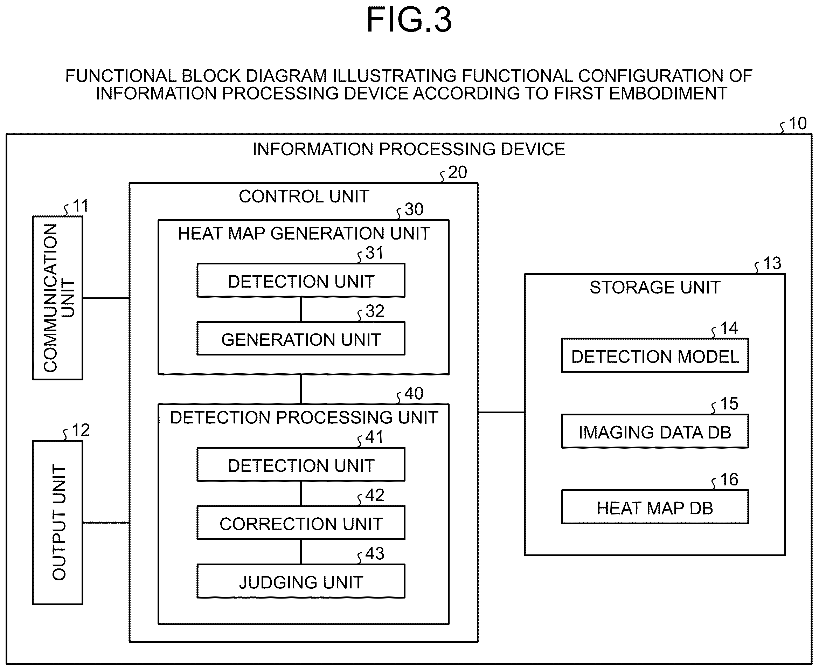

FIG. 3 is a functional block diagram illustrating a functional configuration of the information processing device 10 according to the first embodiment. As illustrated in FIG. 3, the information processing device 10 includes a communication unit 11, an output unit 12, a storage unit 13, and a control unit 20.

The communication unit 11 is a processing unit that controls communication with other devices, and for example, is implemented by a communication interface and the like. For example, the communication unit 11 receives video data including a plurality of frames from the camera 1.

The output unit 12 is a processing unit that displays various types of information, and for example, is implemented by a display, a touch panel, and the like. For example, the output unit 12 displays the generated heat map, the detection result before correction, and the final detection result after correction.

The storage unit 13 is a processing unit that stores therein various types of data, a computer program executed by the control unit 20, and the like, and for example, is implemented by a memory, a hard disk, and the like. This storage unit 13 stores therein a detection model 14, an imaging data database (DB) 15, and a heat map DB 16.

The detection model 14 is a trained machine learning model and outputs the detection results of a person according to the input of an image (frame). For example, as the detection results of a person, the detection model 14 outputs "BB (category), certainty factor". In this example, the BB includes an area judged to contain a person and the detected category (person), and the certainty factor indicates the reliability for a person contained in the area indicated by the BB. The reliability is represented by values ranging from "0.0" to "1.0", and the reliability is increased as the value is close to "1.0".

The imaging data DB 15 is a database that stores therein videos including a plurality of frames captured by the camera 1. For example, the imaging data DB 15 stores therein the frame (image) in which the imaging range of the camera 1 is captured, and imaging conditions such as time, date and time, time zone, season, period, weather, and the like when the frame is captured, in an associated manner.

The heat map DB 16 is a database that stores therein a heat map H generated by a heat map generation unit 30, which will be described later. For example, the heat map DB 16 stores therein the heat map H that represents the average certainty factor at each set of coordinates in a range captured by the camera 1, on the basis of the certainty factor of each of the bounding boxes detected from the captured image.

The control unit 20 is a processing unit that controls the entire information processing device 10, and for example, is implemented by a processor and the like. The control unit 20 includes the heat map generation unit 30 and a detection processing unit 40. The heat map generation unit 30 and the detection processing unit 40 are implemented by an electronic circuit included in the processor, a process executed by the processor, and the like.

The heat map generation unit 30 is a processing unit that includes a detection unit 31 and a generation unit 32. The heat map generation unit 30 generates the heat map H used for correcting the certainty factor of the detection results of a person, and stores the heat map H in the heat map DB 16. The heat map generation unit 30 can generate the heat map H for any period of time, such as for each season, for each period, for each weather, and the like.

The detection unit 31 is a processing unit that performs person detection on an image (frame) captured by the camera 1, using the detection model 14. Specifically, the detection unit 31 performs person detection on a frame of each time stored in the imaging data DB 15, and outputs the detection results to the generation unit 32.

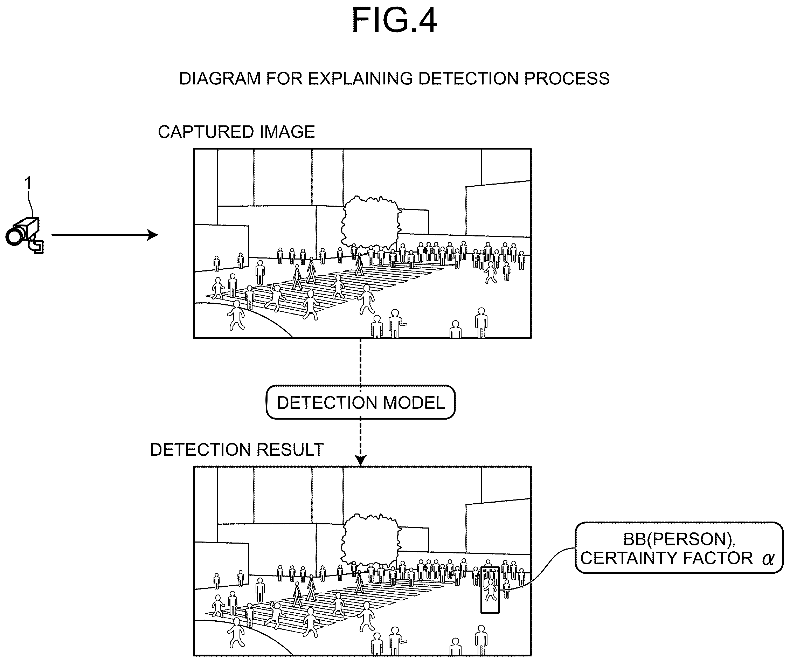

FIG. 4 is a diagram for explaining a detection process. As illustrated in FIG. 4, the detection unit 31 inputs a captured image that is an example of a frame, into the detection model 14, and obtains the detection results from the detection model 14. In this example, the detection results include the BB (category = person) that contains a person, and a certainty factor α.

The generation unit 32 is a processing unit that generates the heat map H, by using the person detection result of each captured image obtained by the detection unit 31. Specifically, for each set of coordinates in the imaging range (frame), the generation unit 32 calculates the average certainty factor of the certainty factor of at least one of the bounding boxes of a person including the coordinates. Then, the generation unit 32 generates the heat map H in which the average certainty factor is associated with each set of coordinates in the imaging range. Each set of coordinates can also be described as each pixel, each pixel coordinate, and the like.

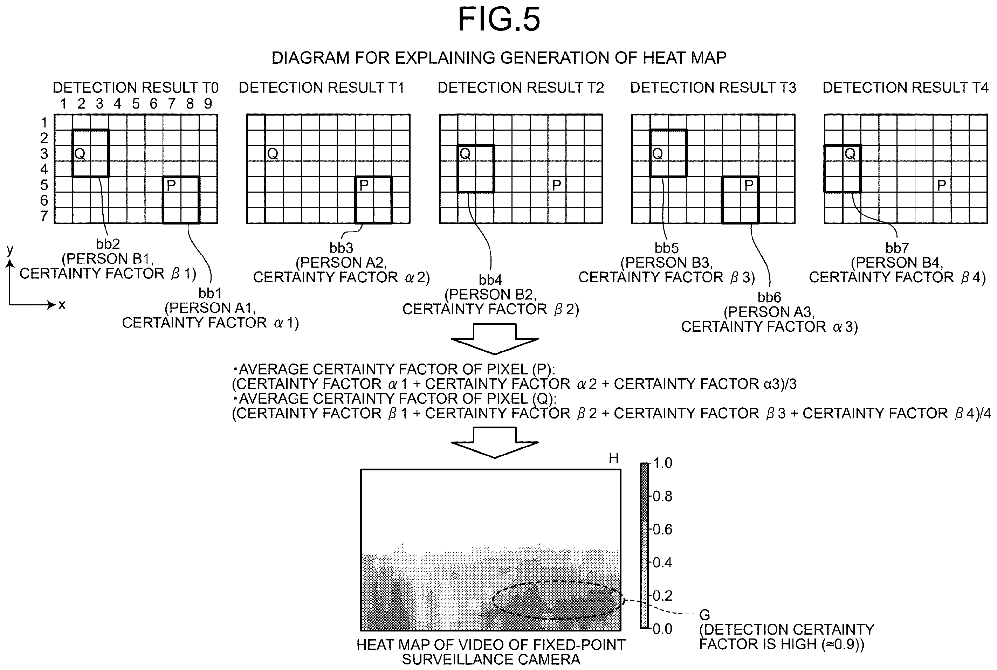

FIG. 5 is a diagram for explaining generation of the heat map H. For example, in FIG. 5, a heat map is generated using a detection result T0, a detection result T1, a detection result T2, a detection result T3, and a detection result T4 that are detection results from the captured images in which imaging conditions such as time is different from each other. If the x-axis is the width of the image and the y-axis is the height of the image, it is assumed that each of the detection results is configured by pixels of (x, y) = (0, 0) to (x, y) = (9, 7).

As illustrated in FIG. 5, the generation unit 32 first obtains a bb1 (person A1, certainty factor α1) and a bb2 (person B1, certainty factor β1) from the detection result T0, and obtains a bb3 (person A2, certainty factor α2) from the detection result T1. Similarly, the generation unit 32 obtains a bb4 (person B2, certainty factor β2) from the detection result T2, a bb5 (person B3, certainty factor β3) and a bb6 (person A3, certainty factor α3) from the detection result T3, and a bb7 (person B4, certainty factor β4) from the detection result T4.

Next, for the pixels of (x, y) = (0, 0) to (x, y) = (9, 7), the generation unit 32 calculates the average value of the certainty factors of the bb that contains the pixels. For example, a pixel (P) corresponding to (x, y) = (7, 5) will be described as an example. In this case, the generation unit 32 obtains the certainty factor α1 of the bb1, the certainty factor α2 of the bb3, and the certainty factor α3 of the bb6 that contain the pixel (P). Then, the generation unit 32 calculates "(certainty factor α1 + certainty factor α2 + certain factor α3)/3" as the average certainty factor of the pixel (P).

Moreover, a pixel (Q) corresponding to (x, y) = (2, 3) will be described as an example. In this case, the generation unit 32 obtains the certainty factor β1 of the bb2, the certainty factor β2 of the bb4, the certainty factor β3 of the bb5, and the certainty factor β4 of the bb7 that contain the pixel (Q). Then, the generation unit 32 calculates "(certainty factor β1 + certainty factor β2 + certainty factorβ3 + certainty factor β4)/4" as the average certainty factor of the pixel (Q).

In this manner, the generation unit 32 calculates the average certainty factor for each pixel in the image captured by the camera 1, and generates the heat map H in which the certainty factor is associated with each pixel. For example, in the heat map H of the video of the fixed-point surveillance camera 1 illustrated in FIG. 5, the average certainty factor of each pixel in an area G is high, and thus indicates that the detection accuracy in the area is high. The average certainty factor around the center is low, and thus indicates that the detection accuracy in the area is low.

Returning to FIG. 3, the detection processing unit 40 is a processing unit that includes a detection unit 41, a correction unit 42, and a judging unit 43, and that performs person detection on a captured image of an object to be detected, using the heat map H.

The detection unit 41 is a processing unit that performs person detection on an image (frame) to be detected that is captured by the camera 1, using the detection model 14. The processing of the detection unit 41 is the same as that in FIG. 4. Hence, the detailed description thereof will be omitted. In this example, it is assumed that the detection unit 41 obtains the detection result T including the bb (person, certainty factor 0.6) from the image to be detected, and outputs the detection result T to the correction unit 42, for example.

The correction unit 42 is a processing unit that corrects the certainty factor of the detection result detected by the detection unit 41, using the heat map H. For example, the correction unit 42 calculates the average value of the average certainty factors of the coordinates in the bounding box of a person detected from the frame to be detected, among the coordinates in the captured image (imaging range). Then, the correction unit 42 corrects the certainty factor of the bounding box of a person detected from the frame to be detected, using the average value of the average certainty factors described above.

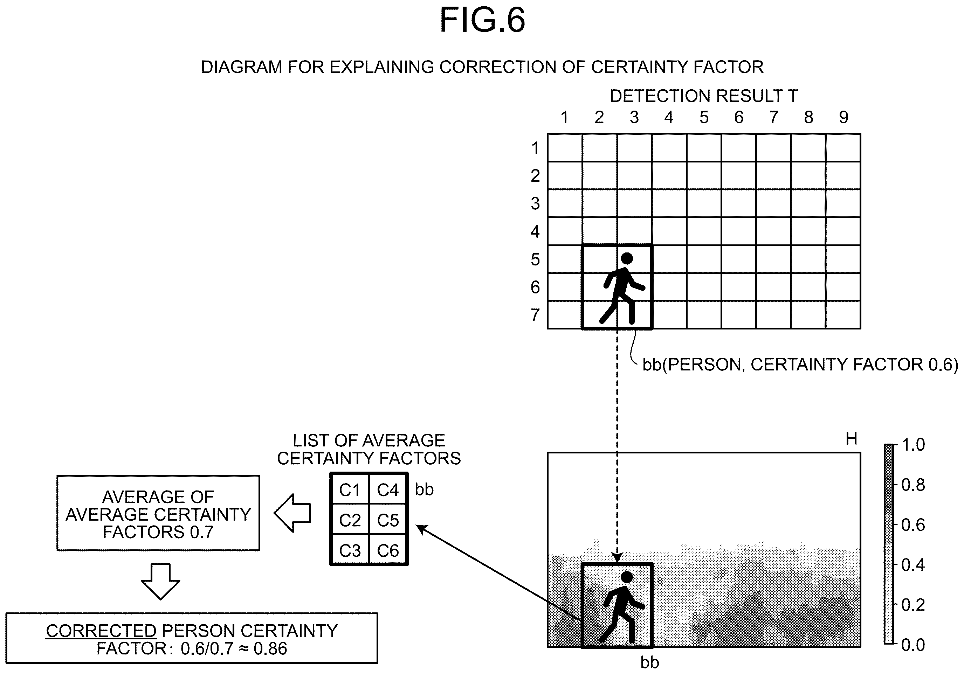

FIG. 6 is a diagram for explaining correction of a certainty factor. As illustrated in FIG. 6, the correction unit 42 obtains a detection result T including the bb (person, certainty factor 0.6). In this example, the bb is an area that contains the total of six pixels of "(2, 5), (2, 6), (2, 7), (3, 5), (3, 6), and (3, 7)".

Next, the correction unit 42 identifies the area of the heat map H corresponding to the bb of "(2, 5), (2,6), (2, 7), (3, 5), (3, 6), and (3, 7)" from the heat map H. Then, the correction unit 42 obtains average certainty factors "C1, C2, C3, C4, C5, and C6" corresponding to each pixel in the area of "(2, 5), (2, 6), (2, 7), (3, 5), (3, 6), and (3, 7)" of the heat map H. Subsequently, the correction unit 42 calculates the average value of the acquired average certainty factors of the pixels by "(C1 + C2 + C3 + C4+ C5 + C6)/6". In this example, it is assumed that the average value of the average certainty factors is calculated as "0.7".

And then, the correction unit 42 corrects the certainty factor "0.6" of the bb in the detection result T, using the average value "0.7" of the average certainty factors. For example, by dividing the detection result by the average value of the average certainty factors described above, the correction unit 42 calculates the corrected certainty factor "0.6/0.7 ≈ 0.86". Then, the correction unit 42 outputs the detection result T including the bb (person, corrected certainty factor 0.86) to the judging unit 43.

The correction unit 42 may also perform a correction process, when the certainty factor of the bb in the detection result T is less than a threshold value. Moreover, the calculation method for correction used by the correction unit 42 is not limited to the method illustrated in FIG. 6, and a function prepared in advance or the like may also be used.

The judging unit 43 is a processing unit that judges the detection of a person, using the corrected certainty factor corrected by the correction unit 42. For example, the judging unit 43 judges that there is a person, when the corrected certainty factor is equal to or greater than a threshold value. In an example of FIG. 6, the corrected certainty factor "0.86" is equal to or greater than the threshold value (0.8). Hence, the correction unit 42 judges that there is a person in the bb of the detection result T. That is, the judging unit 43 judges that a person such as a suspicious person is detected from the image to be detected.

### Flow of Generation Process of Heat Map

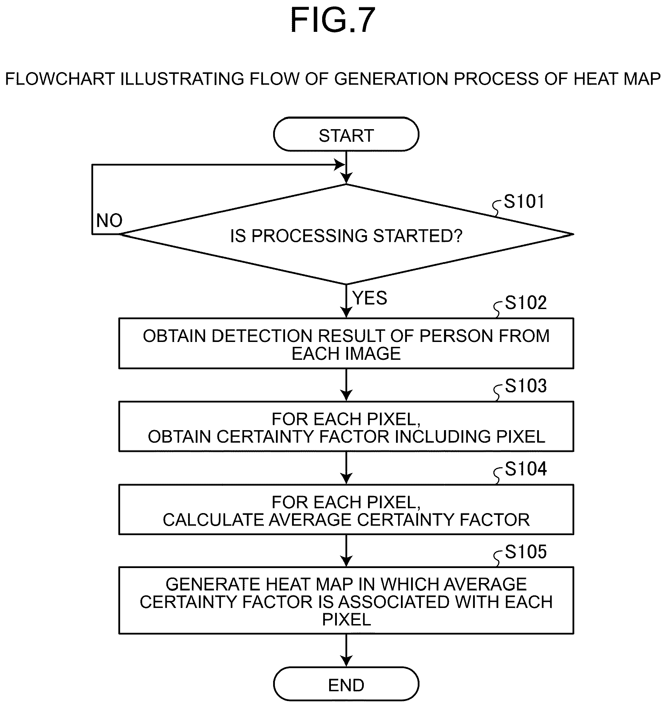

FIG. 7 is a flowchart illustrating a flow of the generation process of a heat map. As illustrated in FIG. 7, for example, when a manager or the like gives an instruction to start processing (Yes at S101), the heat map generation unit 30 obtains the detection results of a person from each image captured in the past using the detection model 14 (S102).

Subsequently, for each pixel within the imaging range, the heat map generation unit 30 obtains the certainty factor including the pixel (S103). Then, for each pixel, the heat map generation unit 30 calculates the average value of the certainty factors (average certainty factor) of the bb that contains the pixel (S104). And then, the heat map generation unit 30 generates the heat map H in which the average certainty factor is associated with each pixel (S105).

### Flow of Person Detection Process

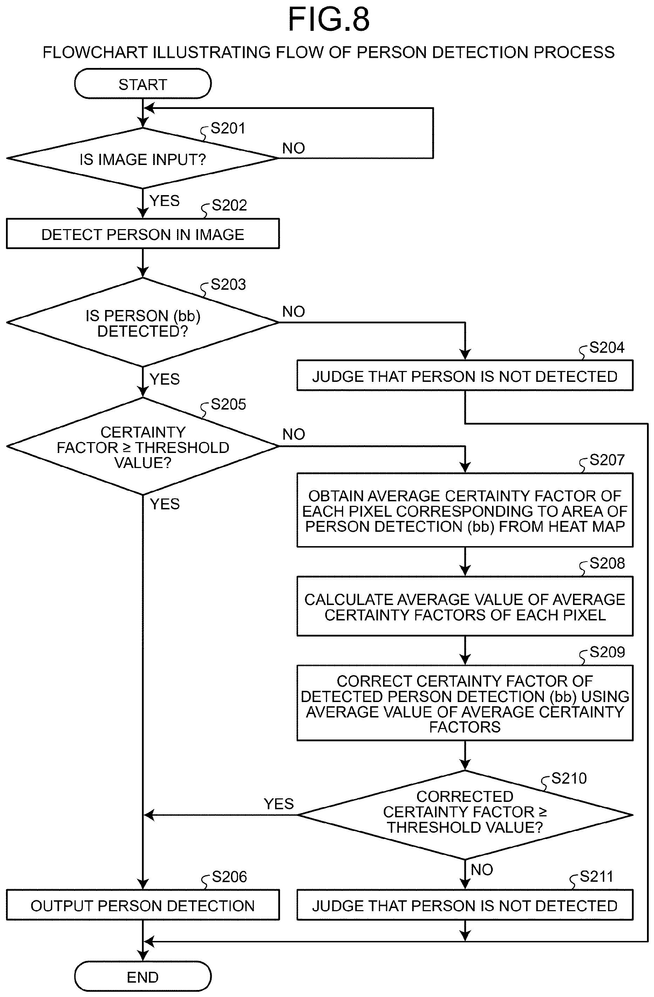

FIG. 8 is a flowchart illustrating a flow of the person detection process. As illustrated in FIG. 8, when an image to be detected is input (Yes at S201), the detection processing unit 40 inputs the image into the detection model 14, and detects a person (S202).

In this example, if a person (bb: bounding box) is not detected (No at S203), the detection processing unit 40 judges that a person is not detected from the image to be detected (S204).

On the other hand, if a person (bb) is detected (Yes at S203), the detection processing unit 40 judges whether the certainty factor of the detected bb is equal to or greater than a threshold value (S205) .

Then, if the certainty factor of the detected bb is equal to or greater than the threshold value (Yes at S205), the detection processing unit 40 judges that a person is detected from the image to be detected, and outputs the detection results of the person including information on the bb and the like (S206).

On the other hand, if the certainty factor of the detected bb is less than the threshold value (No at S205), the detection processing unit 40 obtains the average certainty factor of each pixel corresponding to the area of person detection (bb) from the heat map (S207).

Subsequently, the detection processing unit 40 calculates the average value of the average certainty factors of the pixels (S208), and corrects the detected certainty factor of the person detection (bb), using the average value of the average certainty factors (S209) .

Then, if the corrected certainty factor of the bb is equal to or greater than the threshold value (Yes at S210), the detection processing unit 40 judges that a person is detected from the image to be detected, and outputs the detection results of the person including information on the bb and the like (S206). On the other hand, if the corrected certainty factor of the bb is less than the threshold (No at S210), the detection processing unit 40 judges that a person is not detected from the image to be detected (S211).

### Effects

As described above, the information processing device 10 generates a heat map that represents the average certainty factor at each set of coordinates in a range captured by the camera 1, on the basis of the certainty factor of each of a plurality of the bbs. As a result, because it is possible to provide information in which a list of certainty factors can be visualized, the information processing device 10 can judge the reliability of the certainty factor during the person detection, and improve the accuracy of person detection.

Moreover, because the information processing device 10 creates a heat map, a manager or the like can identify a location where the detection accuracy is low and a location where overlooking is likely to occur. The information processing device 10 can provide information that enables a manager or the like to find an installation position of the camera 1 and the best camera arrangement with less weakness.

Furthermore, when an existing detection model is used in an operational environment different from that during training, weakness (condition in which the detection performance is low) due to the environmental difference may be likely to occur. In such a case, the detection model may be fine-tuned to correct the weaknesses, but this is costly. However, by using the information processing device 10 according to the first embodiment, it is possible to correct the weakness of the detection model at a low cost.

Moreover, the information processing device 10 performs person detection using the trained detection model, and generates a heat map by using the person detection result. Hence, it is possible to generate a heat map using an accurate certainty factor.

Furthermore, the information processing device 10 can judge the final person detection, after correcting the certainty factor of the person detection result using a heat map. As a result, the information processing device 10 can implement the accurate person detection even under a condition where the detection model finds it difficult to detect. Hence, it is possible to reduce overlooking, and improve the accuracy of person detection. With the above process, it is also possible to suggest how to deploy cameras in a scene such that the detection will be more robust.

### (b) Second Embodiment

While the embodiment of the present invention has been described, the present invention may be implemented in various different forms other than the embodiment described above.

### Numerical Values etc.

The size of the image, the number of pixels, numerical values, threshold values, and the like used in the above embodiment are merely examples, and may be changed as desired. Moreover, the flow of the process described in each flowchart can be modified as appropriate within a consistent range. Furthermore, the information processing device 10 is an example of a detection device, and the detection model is an example of a machine learning model. Although the person detection has been discussed above, the embodiment is not be limited thereto, but may also be applied to detection of an object such as a car.

Still furthermore, in the embodiment described above, a heat map is generated using the certainty factor output from the detection model. However, it is not limited thereto. For example, the reliability of each pixel in the image may be calculated based on the past detection result records or the like, and the reliability of each pixel in the image may be set by a user or the like. As for the threshold value of the certainty factor before correction used for comparison, the same threshold value may be used before correction and after correction.

### System

The processing procedures, control procedures, specific names, and information including various types of data and parameters illustrated in the above specification and drawings may be optionally changed unless otherwise specified.

Moreover, the specific modes of distribution and integration of the components of the devices are not limited to those illustrated in the drawings. For example, the heat map generation unit 30 and the detection processing unit 40 may be executed by different devices. In other words, all or some of the components may be functionally or physically distributed or integrated in any unit according to various types of loads and usage conditions. Furthermore, all or some of the processing functions performed by the devices may be implemented by a CPU and a computer program analyzed and executed by the CPU, or may be implemented as hardware using wired logic.

Furthermore, all or some of the processing functions performed by the devices may be implemented by a CPU and a computer program analyzed and executed by the CPU, or may be implemented as hardware using wired logic.

### Hardware

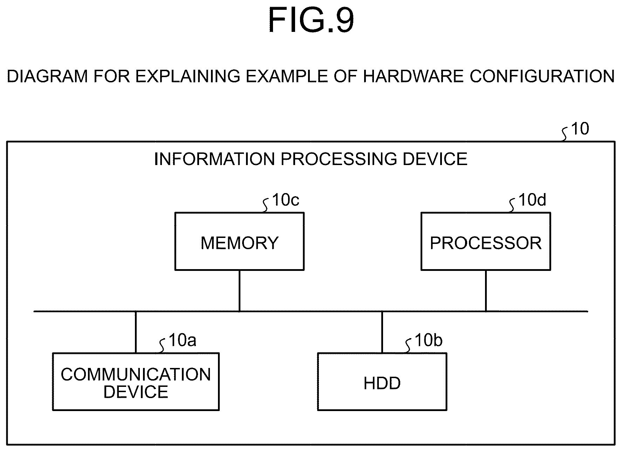

FIG. 9 is a diagram for explaining an example of a hardware configuration. As illustrated in FIG. 9, the information processing device 10 includes a communication device 10a, a Hard Disk Drive (HDD) 10b, memory 10c, and a processor 10d. Moreover, the parts illustrated in FIG. 9 are interconnected by a bus or the like.

The communication device 10a is a network interface card or the like, and communicates with other devices. The HDD 10b stores therein a computer program and DBs for activating the functions illustrated in FIG. 3.

The processor 10d reads a computer program that executes the same process as that of each processing unit illustrated in FIG. 3 from the HDD 10b or the like, and develops the read computer program on the memory 10c, to activate the process for executing the functions illustrated in FIG. 3 and the like. For example, these processes execute the same functions as the processing units in the information processing device 10 do. Specifically, the processor 10d reads computer programs having the same functions as those of the heat map generation unit 30, the detection processing unit 40, and the like, from the HDD 10b and the like. Then, the processor 10d executes the process that executes the same processes as those of the heat map generation unit 30, the detection processing unit 40, and the like.

In this manner, by reading and executing the computer programs, the information processing device 10 is activated as an information processing device that executes the information processing method and the detection method. Moreover, by reading the computer program described above from a recording medium through a medium reading device, and executing the read computer program described above, the information processing device 10 can also implement the same functions as those in the embodiment described above. Note that computer programs in other embodiments are not limited to being executed by the information processing device 10. For example, the embodiment described above is similarly applicable, when another computer or server executes a computer program, and when the other computer and server execute a computer program in cooperation.

This computer program may also be distributed via a network such as the Internet. Moreover, the computer program may be recorded on a computer-readable recording medium such as a hard disk, a flexible disk (FD), a CD-ROM, a Magneto-Optical (MO) disk, a Digital Versatile Disc (DVD), and the like, and executed by a computer reading out from the recording medium.

### Reference Signs List

In one aspect, it is possible to improve the accuracy of object detection.

## Claims

1. An information processing program that causes a computer (10) to execute a process comprising:
detecting (S101) a bounding box of an object in a plurality of frames captured by a camera installed at a predetermined point; and
generating (S105) a heat map that represents average reliability at each set of coordinates in a range captured by the camera, based on reliability of each of a plurality of the detected bounding boxes.

2. The information processing program according to claim 1, wherein the detecting (S105) includes detecting (S103) the bounding box of the object and the reliability, by inputting each of the frames of the range captured at a predetermined time interval into a machine learning model.

3. The information processing program according to claim 1 or 2, wherein
the generating (S105) includes
calculating (S104) average reliability of the reliability of at least one of the bounding boxes of the object including the coordinates, for each set of coordinates in the range, and
generating (S105) the heat map in which the average reliability is associated with each set of coordinates in the range.

4. An information processing method carried out by a computer (10), comprising:
detecting (S101) a bounding box of an object in a plurality of frames captured by a camera installed at a predetermined point; and
generating (S105) a heat map that represents average reliability at each set of coordinates in a range captured by the camera, based on reliability of each of a plurality of the detected bounding boxes.

5. An information processing device (10) comprising:
a control unit (20) configured to execute a process including:
detecting (S101) a bounding box of an object in a plurality of frames captured by a camera installed at a predetermined point; and
generating (S105) a heat map that represents average reliability at each set of coordinates in a range captured by the camera, based on reliability of each of a plurality of the detected bounding boxes.
